# EUROPÄISCHE PATENTSCHRIFT

(11) **EP 0 598 947 B1**
(45) Veröffentlichungstag und Bekanntmachung des Hinweises auf die Patenterteilung: **04.06.1997**
(21) Anmeldenummer: 92121853.3
(22) Anmeldetag: 23.12.1992
(51) Int. Cl.: B65G 45/14

(54) **Föderbandabstreifer**
Conveyor belt scraper
Dispositif racleur de bande transporteuse

(30) Priorität: 27.11.1992 DE 4239890; 01.12.1992 DE 9216281 U
(43) Veröffentlichungstag der Anmeldung: 01.06.1994
(73) Patentinhaber: Schulmeistrat, Hans-Dieter, 46354 Südlohn (DE)
(72) Erfinder: Schulmeistrat, Hans Dieter, 4286 (46354) Südlohn-Oeding (DE); Schulmeistrat, Manfred, 4650 (45892) Gelsenkirchen (DE)

(56) Entgegenhaltungen:
- EP-A- 0 481 221
- DE-A- 2 709 714
- DE-A- 3 217 740
- DE-A- 3 841 691
- DE-A- 3 915 609
- GB-A- 2 201 136

## Beschreibung

Die Erfindung betrifft einen Förderbandabstreifer gemäß dem Oberbegriff des Anspruches 1.

Förderbandabstreifer gemaß der Erfindung werden an Gummigurtbändern eingesetzt, um anhaftendes Fördergut mit Hilfe von auf dem Gurt einwirkenden Schabern abzustreifen und so zu verhindern, daß das Unterband die Bandanlage verschmutzt. Zu diesem Zweck reicht die Arbeitsbreite der Schaber über die Gurtbreite. Dadurch wird eine ausreichende Reinigung des Gurtes auch dann erzielt, wenn das Fördergut etwa in der Steine- und Erdenindustrie stark klebende Eigenschaften aufweist.

Auch im Bereich der Einwirkung der Schaber auf den Gurt führt dieser, bauartbedingt, Schwingungen aus, wobei gelegentlich auch die Schabereinwirkung dem Gurt ausweichen und in seine Ausgangslage elastisch zurückfedern läßt. Die Schaber sitzen daher auf einer Traverse, welche über Schwingen beidseitig an je ein Torsionselement angeschlossen ist. Hierdurch wird gewährleistet, daß die Schaber elastisch den Bewegungen des Gurtes folgen und damit in ständiger Berührung mit dem Gurt verbleiben können, auch wenn dieser Schwingungen ausführt. Die Förderbandabstreifer selbst sind ortsfest angeordnet und deshalb mit einem passenden Teil des stationären Fördergerüstes verbunden.

Derartige Förderbandabstreifer für das von der Umkehrtrommel ablaufende Unterband sind bekannt.

Die Schaber auf der Traverse, deren beide Enden über Schwingen an Torsionselemente angeschlossen sind, werden im wesentlichen rechtwinklig zur Gurtoberfläche gehalten. Hierdurch wird im Normalbetrieb, also beim Rückwärtslauf des Unterbandes, eine optimale Schaberstellung gewährleistet, bei der sich regelmäßig kein abgestreiftes Fördergut in dem von den Schabern und der Gurtoberfläche eingeschlossenen Winkel ansammeln kann, sondern an der Vorderkante der Schaber abfällt.

Es hat sich jedoch herausgestellt, daß beim Reversieren des Gurtes, bei dem das Unterband vorwärtsläuft, sich der Winkel zwischen den Schabern und der Gurtoberfläche so stark vergrößert, daß sich in dem Raum zwischen den Schabern und der Gurtoberfläche Fördergut ansammelt und nicht mehr nach unten von selber restlos herausfällt. Das hat u.U. Beschädigungen oder gar Zerstörungen der Schaberkanten bzw. der Gurtoberfläche zur Folge, sobald das Förderband betriebsmäßig reversiert wird, um z.B. die beiden einander entgegengesetzten Laufrichtungen des Bandes für die Förderung zu nutzen, was aber auch bereits dann eintreten kann, wenn der Gurt nur bei bestimmten Anlässen, etwa beim Zusammenfahren der Gurtenden nach Bandrissen reversiert werden muß.

Nach der EP-A-0481 221 ist beispielsweise ein gattungsgemäßer Förderbandabstreifer im Trommelbereich bekannt, der an Bandanlagen mit Reversierbetrieb eingesetzt werden kann. Die den Abstreifer tragende Stütze ist mit einer Sperre ausgerüstet, die jedoch einen Eingriff des Abstreifers am Gurt bei Reversierbetrieb nicht gewährleistet. Ein weiterer Abstreifer für den Reversierbetrieb ist in der DE-A-23 17 740 dargestellt, wobei die an den Gurt anzulegende erforderliche Vorspanung über Federarme einstellbar ist. Zwischen den Federarmen und den Schaberblättern sind jedoch weitere Torsionsfederelemente angeordnet, die zwar die Umstellung aus einer schleppenden Vorlaufstellung in eine schleppende Rücklaufstellung erlauben sollen, die aber aufgrund einer mangelnden Einstellbarkeit und Feststellbarkeit keine genaue Positionierung der Schaberblätter im Reversierbetrieb ermöglichen und ein Umschlagen nicht unbedingt ausschließen lassen.

Die DE-A-39 15 609 zeigt weiterhin einen Abstreifer, der mit Hilfe eines anpaßbaren Auslegerarmes überall am Traggerüst installierbar ist, der eine Justiereinrichtung aufweist, der jedoch für den Einsatz im Reversierbetrieb keine gurtschonende und verschleißarme Positionierung erlaubt. Eine nachgiebige Abstreifervorrichtung ist auch in der GB-A-2 201 136 beschrieben, die ebenfalls eine für den Reversierbetrieb erforderliche vorteilhafte Positioniereinrichtung für den Abstreifer nicht aufweist.

Demgegenüber liegt der Erfindung die Aufgabe zugrunde, einen Förderbandabstreifer zu schaffen, dessen Schaber bei elastischer Anpassung an den Gurt aus der normalen Position bei üblicher Förderrichtung in eine festgelegte Einstellung bei Reversierbetrieb gebracht werden, in der eine effektive Reinigung des Gurte erzielt und gleichzeitig Beschädigungen und Zerstörungen der Schaberkanten und der Gurtoberfläche vermieden werden.

Diese Aufgabe wird gelöst durch die im Anspruch 1 wiedergegebenen Merkmale.

Gemäß der Erfindung sind die Schaber um die Achse der Traverse begrenzt beweglich gelagert, wodurch sie beim Reversieren des Gurtes infolge des Mitnahmeeffektes von selbst um einen vorgegebenen Winkel in Laufrichtung des Förderbandes schwenken. Dadurch wird die Reibung zwischen den Schaberkanten und der Gurtoberfläche herabgesetzt, so daß sich die Vergrößerung des Raumes zwischen den Schabern und dem Gurt im wesentlichen auf den vorgegebenen Winkel beschränkt, um den die Schaber frei schwenken können. Es hat sich herausgestellt, daß dieser Winkel klein gehalten werden kann. Unter praktischen Bedingungen läßt er sich z.B. auf ca. 15° begrenzen. Das ermöglicht eine ordnungsgemäße Funktion der Schaber bei Normal- und Reversierbetrieb des Bandes und verhindert die bislang auftretenden Schäden.

Ein besonderer Vorteil der Erfindung liegt in dem die Schaber tragenden und die Traverse umgebenden Hüllrohr, wodurch sich die Drehbewegung der Schaber übertragen läßt. Diese praktische Ausführungsform läßt sich dadurch optimieren, daß die den Schwenkwinkel begrenzenden Anschläge leicht herzustellen sind, weil sie lediglich eine Aussparung und einen Schraubenbolzen voraussetzen, der in entsprechende Aussparungen eingesetzt wird.

Es kann sich in der Praxis jedoch als notwendig erweisen, die Einhaltung des vorgegebenen Winkels, um den die Schaber beim Reversieren des Gurtes umklappen, zu erzwingen. Zu diesem Zweck wird die Auslenkung der Torsionselemente erfindungsgemäß auf einen Winkelbetrag begrenzt.

Die Einwirkung der Schaber auf den ablaufenden Untergurt muß aus verschiedenen Gründen elastisch sein und dient vor allem dazu, die aufeinander reibenden Teile vor Beschädigungen zu schützen. Zwar können die Schaber ihrerseits elastisch ausgebildet werden, jedoch reichen die dadurch ermöglichten elastischen Nachgiebigkeiten in der Regel nicht aus. Deswegen sitzen die Schaber erfindungsgemäß auf einer den Gurt übergreifenden Traverse, die sich über Schwingen in Torsionsfedern abstützt. Derartige Torsionsfedern liegen am Gehäuse zwischen der inneren Gehäusewand und einem konzentrisch inneren Bauteil, an das die betreffende Schwinge drehfest angeschlossen ist. Das Torsionsfedergehäuse weist eine Verbindung mit dem stationären Teil des Förderers auf und ist daher ortsfest.

Diese Verbindung der beiden je einem Traversenende zugeordneten Torsionsfederelemente dient andererseits der richtigen Einstellung der Traverse auf den Fördergurt. Sie ist deshalb lös- und feststellbar. Dabei ist die Anordnung so getroffen, daß sich die Teile um eine gemeinsame Achse verschwenken lassen, wodurch die Winkellage der Schaberebene zur Gurtebene fest eingestellt wird. Nach erfolgter Einstellung erfolgt eine Arretierung.

Beispielsweise sitzt diese Verbindung zwischen dem Torsionsfedergehäuse und einer Montageplatte, welche ihrerseits über eine Teleskopstütze an das Fördergerüst angeschlossen ist. Die Verbindung zwischen der Montageplatte und dem Torsionsfedergehäuse besteht aus einem Schraubenbolzen, welcher in einen massiven Deckel des Torsionsfedergehäuses eingedreht und gegen Rückdrehung mit einer Kontermutter gesperrt ist; beide, einem Torsionsfedergehäuse zugeordneten Schraubenbolzen sind ausgefluchtet und weisen eine einheitliche Schraubenrichtung, d.h. eine Anzugsrichtung im Uhrzeigersinn auf. Die Schraubenbolzen bilden dann die gemeinsame Schwenkachse für die Schwingen auf beiden Seiten der Traverse.

Derartige Anordnungen sind bekannt. Allerdings geht hierbei manchmal die Winkelstellung zwischen der Montageplatte und dem ihr zugeordneten Torsionsfederelement verloren, wenn die Traversen über die Schwingen und die Torsionsfederelemente die Schraubenbolzen entgegen der Anzugsrichtung der Kontermutter belastet. Das tritt insbesondere dann auf, wenn das Förderband reversiert wird. Dann kehrt sich nämlich das durch den Mitnahmeeffekt des Gurtes an den Schabern auftretende Drehmoment um, und die Traverse lockert über die Schwinge und das Torionsfederelement die Verbindung an der Montageplatte. Das führt zu Fehlfunktionen der Schaber und kann Beschädigungen des Förderbandabstreifers und/oder Gummigurtes zur Folge haben.

Gemäß Anspruch 5 wird durch die in umgekehrten Richtungen lös- und feststellbaren Verbindungen an beiden Seiten der Traverse erreicht, daß, unabhängig von der Laufrichtung des Gurtes, das oben beschriebene, auf den Mitnahmeeffekt des Gurtes an den Schabern auftretende Drehmoment über stets eine Schwinge und das zugeordnete Torsionsfederelement die Verbindung festzieht. Der Vorteil besteht darin, daß der einmal gewählte und eingestellte Winkel zwischen der Ebene der Schaber und dem Gurt zuverlässig eingehalten wird, so daß Fehlfunktionen und Beschädigungen des Förderbandabstreifers und/oder Gummigurtes zuverlässig vermieden werden. Hierzu verwendet man an einer Seite des Förderbandes für eine der Verbindungen eine Schraube mit Rechtsgewinde, während man auf der gegenüberliegenden Seite eine Schraube mit Linksgewinde anordnet. Dementsprechend sitzen zwischen den Schraubenköpfen und dem diesen jeweils zugeordneten stationären Teil des Förderers auf dem Gewindeteil der Schraube je eine Kontermutter, die bei Rechts- und Linksdrehung festgezogen wird.

Die Einzelheiten, weitere Merkmale und andere Vorteile der Erfindung ergeben sich aus der nachfolgenden Beschreibung einer Ausführungsform anhand der Zeichnung. Diese zeigen in
- Figur 1: unter Fortlassung aller für das Verständnis der Erfindung nicht erforderlichen Einzelheiten den Erfindungsgegenstand in Seitenansicht,
- Figur 2: in abgebrochener Darstellung eine Draufsicht auf den Gegenstand der Figur 1 und
- Figur 3: unter Weglassung aller für das Verständnis der Erfindung nicht erforderlichen Einzelheiten einen Teil der an einer Seite des Förderbandes angeordneten Baugruppen, die teilweise im Schnitt wiedergegeben sind.

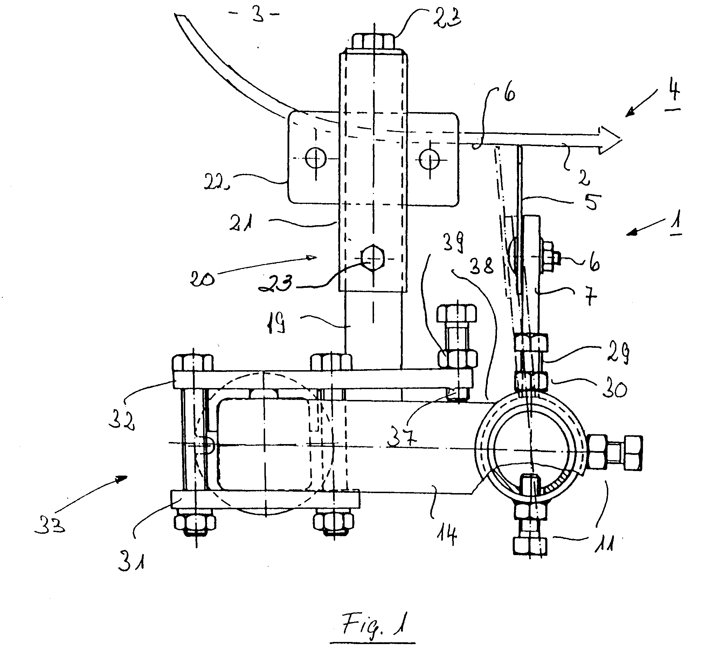

Der allgemein in Figur 1 mit 1 bezeichnete Förderbandabstreifer wirkt auf den abgebrochen dargestellten Untergurt 2 eines Gummigurtbandes, dessen Abwurf und Abtriebstrommel bei 3 angenommen ist. Der Normallauf des Gurtes ist durch den Pfeil 4 dargestellt, wobei der Untergurt rückwärts läuft.

Der Abstreifer reicht über die Breite des Untergurtes 2 und wirkt mit segmentierten Schabern 5 auf die Oberseite 6 des Gurtes 1. Die Schaber sind mit einer Verschraubung 6 mit einem Halter 7 verspannt, welcher auf dem Hüllrohr 8 einer Rohrtraverse 9 befestigt ist. Die Rohrtraverse 9 sitzt an beiden Ende in einer rohrförmigen Buchse 10 und wird in dieser kraftschlüssig mit Hilfe von Schraubenbolzen 11, 12 gehalten. Die Hülsen 10 bilden jeweils das Ende einer Schwinge 14, welche drehfest mit dem beweglichen Teil 15 einer Torsionsfeder in einem Torsionsfederelement 16 verbunden ist. Der unbewegliche Teil des Torsionsfederelementes besteht aus einem geflanschten Vierkantrohr 17, welches mit seinem Flansch 18 mit dem Innenteleskop 19 einer Drehmomentenstütze 20 verbunden ist. Das Außenteleskop 21 der Drehmomentenstütze 20 läßt sich über eine Lagerplatte 22 drehfest mit einem nicht dargestellten Teil des Bandtraggerüstes bzw. des Abwurfkopfes der Bandanlage verschrauben. Das Innenteleskop 19 läßt sich mit Hilfe einer Stellschraube 23 gegenüber dem Außenteleskop 21 einstellen.

Wie sich aus der strichpunktiert wiedergegebenen Darstellung der Figur 1 ergibt, werden die Schaber 5 von dem Gurt 2 oder unter dem Einfluß des Mitnahmeeffektes gemeinsam um die Achse der Traverse 9 aus ihrer in ausgezogener Linienführung dargestellten Arbeitsstellung in eine Reversierstellung geschwenkt, sobald die Laufrichtung des Bandes 2 umgesteuert wird. Dies erfolgt über einen vorgegebnen Bogenwinkel, der im Ausführungsbeispiel ca. 15° gegen die Normalstellung beträgt, in der die Schaber mit der Gurtebene einen Winkel von 90° einschließen. Wird nach dem Reversieren des Gurtes 2 die Bandlaufrichtung erneut geändert, so schwenken die Schaber 5 in die in ausgezogenen Linien wiedergegebene Arbeitsstellung zurück.

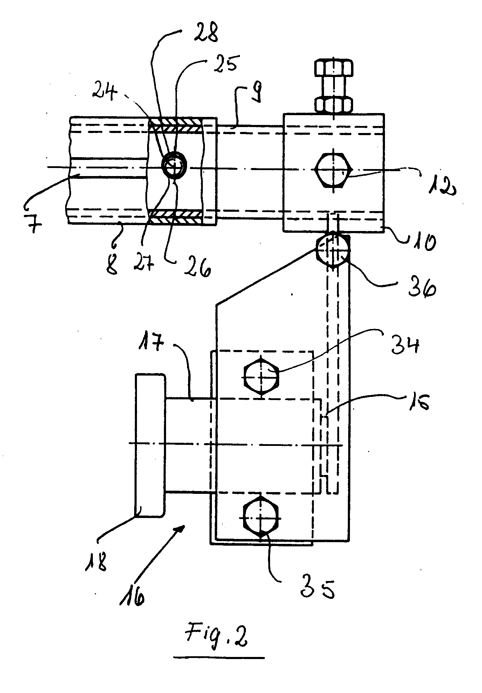

Die Begrenzung des Winkels auf einen vorgegebenen Wert wird erzwungen. Dies geschieht mit Hilfe von Anschlägen, die einerseits von einer Schraube 24 und andererseits von einer elliptischen Aussparung 25 nach Art eines Langloches in der Rohrtraverse 9 gebildet wird, wie dies in Figur 2 angedeutet ist. Die längere Achse 26 der Aussparung 25 ist in der Drehrichtung des Hüllrohres 8 auf der Rohrtraverse 9 orientiert.

Die Schraube 24 greift durch die Aussparung 25 und kann daher die kurzen Krümmungen 27, 28, welche die Stirnseiten der Aussparung 25 bilden, als formschlüssige Anschläge nutzen.

Die dazu erforderliche Stellung der Schraube 24 wird dadurch gewährleistet, daß diese den mit Gewinde versehenen Teil einer Sechskantschraube 29 bildet, welche mit einer Kontermutter 30 an dem Höllrohr 8 festgelegt ist.

Gemäß der Erfindung ist außerdem die Torsionsfederauslenkung im Torsionselement 16 festgelegt, d.h. auf den Winkel begrenzt, um den die Schaber 5 beim Reversieren des Bandes und umgekehrt klappen. Hierzu dient nach dem dargestellten Ausführungsbeispiel eine Schelle 33 mit zwei ebenen, im wesentlichen parallelen Blechen 31, 32, welche die Schellbänder bilden. Diese Schellbänder werden mit Hilfe eines Paars von Schraubenbolzen 34, 35 auf dem unbeweglichen Gehäuseteil 17 des Torsionsfederelementes festgelegt. Die Justierung erfolgt durch eine Justierschraube 36, welche sich mit ihrem Gewindeteil 37 auf der Oberkante 38 der Schwinge 14 abstützt und an dem Blech 32 mit einer Kontermutter 39 gehalten ist. Die Formschlüssigkeit der Schellbänder 31, 32 wird durch den im wesentlichen quadratischen Querschnitt des Torsionsfederelementgehäuses 17 gewährleistet, so daß diese Schelle 33 unverdrehbar festgelegt ist.

Andererseits kann die Wirkung der Torsionsfeder voll genutzt werden, wenn das Band den mit dem Pfeil 4 angedeuteten Normallauf ausführt, so daß entsprechend dem Antrieb des Bandes die Änderungen der Laufrichtung des Unterbandes keinen Einfluß auf den Kontakt der Schaber mit der Oberseite 6 des Bandes haben.

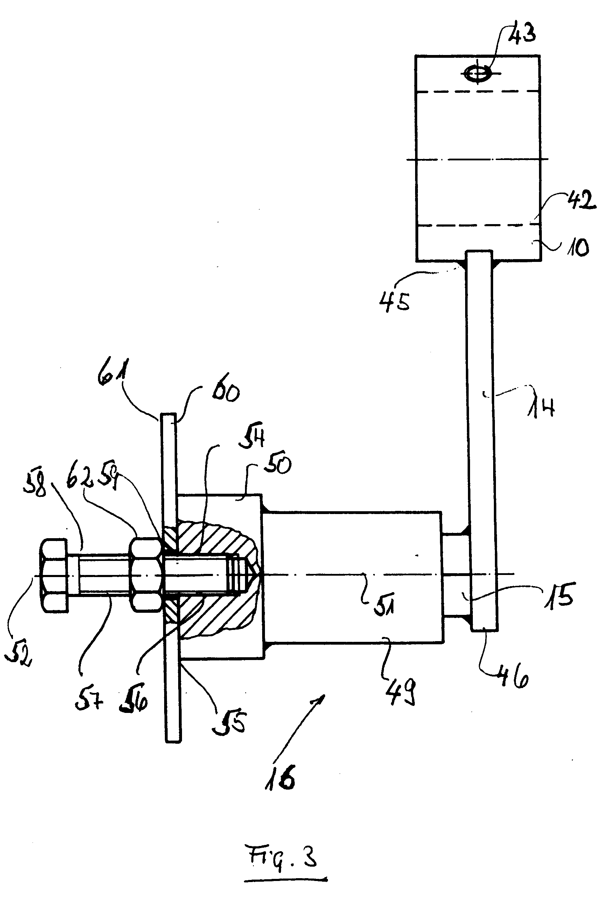

Die rohrförmige Hülse 10 nimmt die in Figur 3 nicht dargestellte Traverse auf, die wiederum aus einem Rohr besteht, das sich auf der zylindrischen Innenseite 42 der Hülse abstützt und gegenüber der Hülse 10 mit Hilfe einer radialen Schraube 43 gegen Drehung gesperrt ist. Die Hülse 10 ist mit dem freien Ende der Schwinge 14 bei 45 drehfest verbunden. Das gegenüberliegende Ende 46 der Schwinge 14 trägt das konzentrische innere Element 15 des bezeichneten Torsionsfederelementes 16. Das konzentrisch äußere Gehäuse 49 hat eine massive Bodenplatte 50.

Mit der Symmetrieachse 51 des Torsionsfederelementes 16 fluchtet die Achse 52 einer Sackbohrung 54 in der Stirnseite 55 der Bodenplatte 50. Die Sackbohrung ist mit Innengewinde 56 für den zylindrischen Gewindeteil 57 einer Sechskantschraube 58 versehen. Diese ist durch eine Bohrung 59 in einer Montageplatte 60 geführt, welche zur Verbindung mit denjenigen Teilen des Förderbandabstreifers Verwendung findet, die zur Festlegung eines stationären Teils der Fördergerüste dienen. Auf die der Bodenplatte 50 gegenüberliegende Seite 61 der Montageplatte 60 wirkt eine Kontermutter 62.

Bei fertig montiertem Förderbandabstreifer ist die Montageplatte 60 stationär. Bei gelöster Schraube 52 läßt sich das Torsionsfederelement 16 mit seinem Gehäuse 49 und seiner Bodenplatte 50 um die Achse 51 verdrehen. Sobald die Mutter 62 angezogen wird, werden die drehbaren Teile gegen weitere Drehungen gesperrt.

Die Anordnung ist so getroffen, daß die aus der Sackbohrung 54, 56 und dem Schraubenbolzen 58 mit der Kontermutter 62 bestehende Verbindung auf der einen Seite des Bandtraggerüstes ein Rechtsgewinde und auf der gegenüberliegenden Seite ein Linksgewinde aufweist. Das hat zur Folge, daß die Schwingenbewegungen in der einen wie in der anderen Richtung jeweils von einer der Verbindungen ohne Lockerungstendenz aufgenommen wird.

## Patentansprüche

1. Förderbandabstreifer (1), insbesondere für reversierbare Förderbänder, der mit einer Traverse (9) versehen ist und gegen den Gurt (2) wirkende Schaber (5) aufweist, wobei die Traverse (9) an den Enden Schwingen (14) trägt, die in je einem Torsionsfederelement (16) gelagert sind, deren feststehende Teile (17) zur lösbaren Verbindung mit dem jeweiligen stationären Teil des Förderbandes dient, **dadurch gekennzeichnet**, daß die auf einem, die Traverse (9) umgebenden Hüllrohr (8) angeordneten Schaber (5) gegenüber der Traverse (9) zwischen zwei, einen Bogenwinkel begrenzenden Anschlägen (27, 28) aus der Arbeitsstellung in eine Reversierstellung und umgekehrt verschwenkbar ausgebildet sind, und daß die mit dem Verschwenken der Schaber (5) in Reversierstellung verbundene Auslenkung der Torsionsfederelemente (16) durch eine, den feststehenden Teil (17) der Torsionsfederelemente (16) umgebende Schelle (33) und eine vom oberen Band (32) der Schelle (33) auf die Schwinge (14) wirkende Justierschraube (36) begrenzt ist.

2. Förderbandabstreifer nach Anspruch 1, **dadurch gekennzeichnet**, daß die Anschläge (27, 28) zur Begrenzung des Bogenwinkels durch eine das Hüllrohr (8) durchgreifende Schraube (24) und eine in Drehrichtung angeordnete elliptische Aussparung (25) in der Traverse (9) gebildet sind.

3. Förderbandabstreifer nach Anspruch 2, **dadurch gekennzeichnet**, daß die kurzen Krümmungen (27, 28) der ellyptischen Aussparung (25) als Bogenwinkelanschläge ausgebildet sind.

4. Förderbandabstreifer nach Anspruch 1, **dadurch gekennzeichnet**, daß die Justierschraube (36) zur Einstellung der Auslenkung der Schwinge (14) um die Torsionsfederelemente (16) im oberen Band (32) der Schelle (33) angeordnet ist und sich mit dem Gewindezapfen (37) auf der Schwinge (14) abstützt und mit einer Kontermutter (39) versehen ist.

5. Förderbandabstreifer nach Anspruch 1, **dadurch gekennzeichnet**, daß der feststehende Teil (17) der Torsionsfederelemente (16) mit einem jeweiligen stationären Teil (60) eines Förderers in koaxialer Anordnung über Schraubverbindungen (54, 58) in zueinander entgegengesetzten Richtungen lös- und feststellbar sind.

6. Förderbandabstreifer nach Anspruch 5, **dadurch gekennzeichnet**, daß zwischen dem Schraubenzapfen (52) einer Schraubverbindung (54, 58) und dem diesen jeweils zugeordneten stationären Teil (60) des Förderers auf dem Gewindeteil (57) einer jeden Schraube (58) eine Kontermutter (62) angeordnet ist.

## Claims

1. Conveyer-belt scraper (1), in particular for reversible conveyer belts, provided with a traverse (9) and with scrapers (5) operating against the belt (2), and the traverse (9) supports at its ends vibrators (14) which are each mounted in a respective torsion spring element (16), its stationary parts (17) serving a releasable connection to a respective stationary part of the conveyer belt, **characterised in that** the scrapers (5), which are arranged on a sleeve pipe (8) which encapsulates the traverse (9), are designed to be pivotal relative to the traverse (9) between two stops (27, 28), which define a curved angle from the operative position into a reversing position and vice versa, and the deflection of the torsion spring elements (16) which is related to pivoting of the scrapers (5) in reverse position is defined by a clamp (3) which surrounds the stationary portion (17) of the torsion spring elements (16) and an adjusting screw (36) which acts from the top band (32) of the clamp (33) on the vibrator (14).

2. Conveyer-belt scraper according to Claim 1, **characterised in that** the stops (27, 28) for defining the curved angle are established by a bolt (24) which passes through the sleeve pipe (8) and an elliptical cutout (25) in the rotary direction in the traverse (9).

3. Conveyer-belt scraper according to Claim 2, **characterised in that** the short curvatures (27, 28) of the elliptical cutout (25) are in the form of curved angular stops.

4. Conveyer-belt scraper according to Claim 1, **characterised in that** the adjusting screw (36) for setting the deflection of the vibrator (14) around torsion spring elements (16) is arranged in the upper band (32) of the clamp (33) and supports itself with threaded pin (37) on vibrator (14) and is provided with a counter-nut (39).

5. Conveyer-belt scraper according to Claim 1, **characterised in that** the stationary portion (17) of the torsion spring elements (16) can be released or fixed with a respective stationary part (60) of a conveyer in coaxial arrangement via screw connections (54, 58) in opposite directions to each other.

6. Conveyer-belt scraper according to Claim 5, **characterised in that** a counter-nut (62) is arranged between the bolt pin (52) of a bolt connection (54, 58) and its associated stationary part (60) of the conveyer on the threaded portion (57) of each bolt (58).

## Revendications

1. Dispositif de raclage pour transporteur à courroie (1), en particulier pour des courroies transporteuses réversibles, qui est muni d'une traverse (9) et qui présente des racles (5) agissant contre la courroie (2), la traverse (9) portant à ses extrémités des manivelles oscillantes (14) qui sont montées dans un élément de ressort à torsion (16), respectivement, dont les parties fixes (17) servent à la liaison amovible avec la partie stationnaire respective du transporteur à courroie, caractérisé en ce que les racles (5) disposées sur une gaine (8) entourant la traverse (9) sont réalisées de manière à pouvoir pivoter par rapport à la traverse (9) à partir de la position de travail dans une position réversible et inversement, entre deux butées (27, 28) délimitant un angle de cintrage, et en ce que la déviation des éléments de ressort à torsion (16), liée au pivotement des racles (5) dans la position réversible, est délimitée par un collier de fixation (33) entourant la partie fixe (17) des éléments de ressort à torsion (16) et par une vis de réglage (36) agissant sur la manivelle oscillante (14) à partir de la branche supérieure (32) du collier de fixation (33).

2. Dispositif de raclage pour transporteur à courroie selon la revendication 1, caractérisé en ce que les butées (27, 28) pour limiter l'angle de cintrage sont formées par une vis (24) traversant la gaine (8) et par un évidement elliptique (25) pratiqué dans la traverse (9), disposé dans le sens de rotation.

3. Dispositif de raclage pour transporteur à courroie selon la revendication 2, caractérisé en ce que les petites courbures (27, 28) de l'évidement elliptique (25) sont réalisées sous forme de butées pour l'angle de cintrage.

4. Dispositif de raclage pour transporteur à courroie selon la revendication 1, caractérisé en ce que la vis de réglage (36) est disposée pour le réglage de la déviation de la manivelle oscillante (14) autour des éléments de ressort à torsion (16) dans la branche supérieure (32) du collier de fixation (33) et s'appuie avec le tourillon fileté (37) sur la manivelle oscillante (14) et est munie d'un contre-écrou (39).

5. Dispositif de raclage pour transporteur à courroie selon la revendication 1, caractérisé en ce que la partie fixe (17) des éléments de ressort à torsion (16) peut être fixée de manière amovible et à deneure dans des directions mutuellement opposées à une partie stationnaire respective (60) d'un transporteur, dans un agencement coaxial, via des liaisons filetées (54, 58).

6. Dispositif de raclage pour transporteur à courroie selon la revendication 5, caractérisé en ce que, entre le tourillon de vis (52) d'une liaison filetée (55, 58) et la partie stationnaire respective (60) du transporteur, est disposé un contre-écrou (62) sur la partie filetée (57) de chacune des vis (58).
